# DEMANDE DE BREVET EUROPEEN

(11) **EP 1 638 179 A1**
(43) Date de publication de la demande: **22.03.2006**
(21) Numéro de dépôt: 05356162.7
(22) Date de dépôt: 16.09.2005
(51) Int. Cl.: H02B 7/06

(54) **Ensemble formant transformateur haute tension/basse tension, poste de transformation et méthode de fabrication et/ou de maintenance d'un tel poste**

(30) Priorité: 17.09.2004 FR 0409876
(71) Demandeur: Gaude Entreprise, 26100 Romans sur Isere (FR)
(72) Inventeur: Marchand, Thierry, 26100 Romans (FR)
(74) Mandataire: Myon, Gérard Jean-Pierre

(57) **Abrégé**

Dans cet ensemble, le transformateur (31) et le disjoncteur (32) appartiennent à une même unité structurelle (3) apte à être insérée en une opération dans un circuit électrique formé dans un poste de transformation, entre une partie haute tension et une partie basse tension de ce circuit, alors que le transformateur (31) et le disjoncteur (32) sont électriquement raccordés l'un à l'autre. Le disjoncteur (32) est monté sur un support (33) qui est fixé au transformateur (31) et qui est réglable, au moins pour ce qui concerne la position du disjoncteur (32) par rapport aux bornes de sortie (311b, 312b, 313b) du transformateur (31).

## Description

La présente invention a trait à un ensemble formant transformateur haute tension/basse tension et disjoncteur général. L'invention a également trait à un poste de transformation comprenant un tel ensemble ainsi qu'à une méthode de fabrication et/ou de maintenance d'un tel poste.

Dans le domaine de la fourniture de courant à des installations industrielles, il est connu d'installer, de façon fixe ou temporaire, un poste de transformation permettant d'abaisser la tension d'un courant haute tension vers une tension directement utilisable par des appareils électriques, le plus souvent de 230 Volts ou de 400 Volts. En fonction de l'évolution de la charge de travail d'un atelier et/ou de son équipement, la puissance électrique nécessaire peut varier, de sorte qu'il est connu d'installer des postes de transformation temporaires ou fixes, le plus souvent disposés à l'intérieur d'une enveloppe bâtie, d'une enveloppe métallique ou d'un conteneur de type « conteneur maritime ». De tels postes de transformation sont également utilisés pour des chantiers, pour des manifestations temporaires, de type foires ou évènements sportifs, ou après des sinistres.

Un poste de transformation comprend généralement deux ou trois cellules haute tension alimentées chacune par un câble haute tension, un transformateur HT/BT alimenté par les cellules haute tension et en aval duquel est installé un disjoncteur général, lui-même raccordé à un tableau général basse tension ou directement à l'installation basse tension, si cette installation est pourvue d'un tel tableau. Le transformateur est en général relié au disjoncteur par des câbles électriques de forte section qui suivent un chemin imposé à l'intérieur de l'enveloppe du poste de transformation.

Or, la puissance électrique que l'on cherche à obtenir en sortie d'un poste de transformation peut évoluer au cours de sa durée d'utilisation, qu'il s'agisse d'un poste installé de façon fixe, par exemple au sein d'une structure en béton à l'intérieur ou à proximité d'un bâtiment, ou d'un poste de transformation transportable, notamment disposé à l'intérieur d'un conteneur maritime, comme mentionné ci-dessus.

Il arrive également qu'il soit nécessaire de procéder au démontage partiel d'un poste de transformation, pour procéder à l'échange de son transformateur et/ou de son disjoncteur général, dans le cadre de sa maintenance.

Avec ces matériels connus, il est nécessaire, soit, dans le cas d'un poste transportable, de changer le poste en totalité, soit, dans le cas d'un poste fixe, de démonter le transformateur, d'une part, et le disjoncteur, d'autre part, puis de ré-installer un transformateur et un disjoncteur dont les caractéristiques correspondent à la puissance demandée en sortie du poste de transformation. Cette opération induit le plus souvent le changement du toron de câbles reliant le transformateur au disjoncteur. Il s'avère donc en pratique, que la modification de la puissance de sortie d'un poste de transformation de l'état de la technique ou sa maintenance est une opération à la fois longue et pénible qui impose de couper l'alimentation de l'installation située en aval pendant une durée importante, de l'ordre d'une journée. Une telle coupure n'étant généralement pas admissible, il est le plus souvent nécessaire de prévoir une source d'alimentation alternative, ce qui rend plus complexe et renchérit d'autant plus une telle intervention.

Il est connu de FR-A-2 842 038 de monter un transformateur, un appareil de coupure moyenne tension et un tableau basse tension sur un bac de sécurité en béton, voire métallique, qui forme un châssis mobile pourvu de roulettes. Le tableau basse tension est accolé à l'appareil de coupure et ne peut être monté que dans une seule position imposée par des prises embrochables. Ainsi, le tableau basse tension ne peut être assemblé au transformateur que dans une seule configuration qui est spécifique de la puissance recherchée pour l'unité de transformation de courant ainsi créée. Ceci rend complexe et onéreuse la fabrication de ce type d'unité.

DE-U-19 74 688 enseigne d'associer un transformateur à un dispositif de coupure haute tension et à un dispositif de répartition basse tension, l'unité ainsi formée étant montée sur un châssis à roulettes. Aucun réglage de la position relative des éléments constitutifs de cette unité n'est envisagé, ce qui impose d'avoir une configuration spécifique et des éléments individuels dédiés pour chaque puissance recherchée.

WO-A-2004/012312 concerne un matériel dans lequel un transformateur est modifié pour être équipé d'une plaque supérieure à travers laquelle une cellule haute tension et un panneau basse tension sont reliés au transformateur. La position de la cellule haute tension et du panneau basse tension est imposée par leur type de montage sur le transformateur qui doit être modifié pour permettre son raccordement à travers la plaque supérieure qui l'équipe. Un tel matériel est donc onéreux et différents matériels doivent être utilisés lorsque différentes puissantes sont recherchées.

C'est à ces inconvénients qu'entend plus particulièrement remédier l'invention en proposant un ensemble formé d'un transformateur et d'un disjoncteur qui permet de simplifier, notamment, les opérations de maintenance d'un poste de transformation, tout particulièrement lorsque la puissance de sortie doit en être modifiée, alors que sa fabrication est relativement aisée et son pris de revient abordable.

Dans cet esprit, l'invention concerne un ensemble comprenant un transformateur haute tension/basse tension et un disjoncteur général appartenant à une même unité structurelle apte à être insérée en une opération dans un circuit électrique formé dans un poste de transformation, entre une partie haute tension et une partie basse tension dudit circuit, alors que ledit transformateur et ledit disjoncteur sont électriquement raccordés l'un à l'autre, ladite unité comprenant un support fixé audit transformateur et sur lequel est monté ledit disjoncteur, caractérisé en ce que ledit support est réglable, au moins pour ce qui concerne la position dudit disjoncteur par rapport aux bornes de sortie dudit transformateur.

Grâce à l'invention, l'ensemble transformateur-disjoncteur peut être mis en place dans un poste de transformation en une opération, ce qui permet de prévoir un échange standard rapide d'un ensemble conforme à l'invention par un autre ensemble de puissance nominale différente. On peut, en particulier, prévoir qu'un poste de transformation soit installé au voisinage d'une installation basse tension, par exemple un atelier, et que sa puissance nominale évolue par un simple échange standard de l'unité structurelle qui forme un ensemble transformateur-disjonsteur. Grâce au caractère réglable du support, la position du disjoncteur peut être adaptée en fonction de la position des bornes de sortie du transformateur qui peut être un transformateur du commerce, de même que le disjoncteur. Le support réglable permet donc d'associer des appareillages électriques standard pouvant être produits en grande série, sans modification structurelle de ceux-ci. En outre, un même support peut être utilisé pour des ensembles dont la puissance nominale du transformateur et l'ampérage nominal du disjoncteur sont différents, la taille du transformateur et du disjoncteur étant différente d'un ensemble à l'autre, le caractère réglable du support permettant l'alignement électromécanique de leurs bornes respectives.

Selon des aspects avantageux mais non obligatoires, un tel ensemble peut incorporer une ou plusieurs des caractéristiques suivantes prise dans toute combinaison techniquement admissible :
- Le support comprend une partie mécano-soudée, comportant des traverses horizontales à partir desquelles s'étendent verticalement des poteaux, alors que le transformateur est solidarisé à cette partie et que des consoles de support du disjoncteur sont montées de façon réglable en hauteur par rapport aux poteaux. Des rails de support du disjoncteur peuvent être montés sur les consoles, la position de ces rails par rapport aux consoles étant réglable à une direction horizontale.
- Le support peut comprendre une partie formant pied pour l'unité structurelle, le transformateur étant monté sur cette partie.
- La liaison électrique entre le transformateur et le disjoncteur est effectuée au moyen de barres électriquement conductrices, rigides ou semi-rigides. Cet aspect de l'invention tire parti du caractère relativement compact de l'unité structurelle ou module de l'invention qui permet l'emploi de barres conductrices à la place des câbles utilisés dans l'état de la technique.

L'invention concerne également un poste de transformation HT/BT qui comprend un ensemble tel que décrit ci-dessus.

Un tel poste de transformation est plus facile à fabriquer et à faire évoluer que ceux de l'état de la technique.

De façon avantageuse, l'enveloppe extérieure de ce poste de transformation est pourvue d'une ouverture de dimensions adaptées à la mise en place ou au retrait de l'unité structurelle à travers cette ouverture. Cette ouverture peut être ménagée dans le plafond de cette enveloppe, sensiblement au dessus de l'emplacement de l'unité structurelle.

On peut en outre prévoir que le poste de transformation est pourvu d'un bac de rétention de liquide susceptible de s'écouler du transformateur, alors que les dimensions d'une partie du support de l'ensemble transformateur-disjoncteur qui forme un pied pour l'unité sont telles que cette partie est immobilisée dans le bac selon deux directions horizontales globalement perpendiculaires. Grâce à cet aspect de l'invention, l'unité transformateur-disjoncteur est maintenue en position dans le poste de transformation et ne risque pas de venir heurter d'autres matériels qui l'équipent, notamment lorsque le poste de transformation est susceptible d'être transporté.

L'invention concerne enfin une méthode de fabrication, de réparation ou de modification de puissance d'un poste de transformation du courant qui comprend des étapes consistant à :
- assembler une unité structurelle comprenant un transformateur haute tension/basse tension et un disjoncteur général, en réglant la position du disjoncteur pour amener ses bornes d'entrée respectives dans une position facilitant leur raccordement aux bornes de sortie du transformateur et en reliant électriquement le transformateur et le disjoncteur ;
- installer, en une opération, l'unité précitée dans le poste de transformation et
- raccorder le transformateur à la partie haute tension du poste et le disjoncteur à la partie basse tension du poste.

Une telle méthode peut être mise en oeuvre lors de la fabrication d'un poste de transformation, dont le coût est ainsi réduit, et également lors des opérations d'ajustement de sa puissance nominale, cette méthode nécessitant l'arrêt de l'installation pour une période courte par rapport aux opérations nécessaires dans les méthodes connues.

L'invention sera mieux comprise et d'autres avantages de celle-ci apparaîtront plus clairement à la lumière de la description qui va suivre d'un mode de réalisation d'un ensemble formant transformateur-disjoncteur, d'un poste de transformation et d'une méthode conformes à l'invention, donnée uniquement à titre d'exemple et faite en référence aux dessins annexés, dans lesquels :
- la figure 1 est une vue de côté de principe, d'un poste de transformation conforme à l'invention, la cloison la plus proche de l'observateur n'étant pas représentée pour la clarté du dessin ;

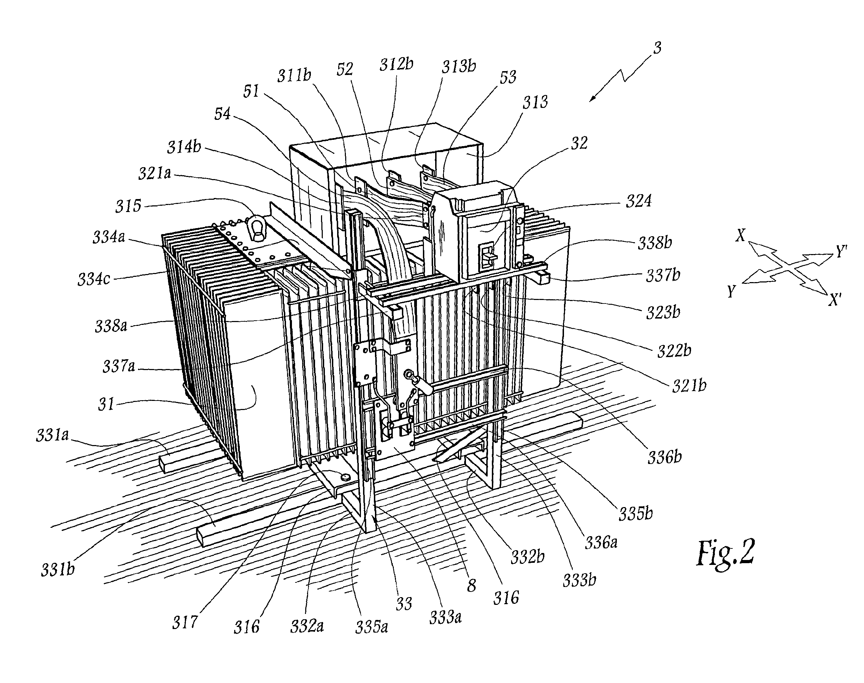

- la figure 2 est une vue en perspective d'un ensemble transformateur/disjoncteur appartenant au poste de la figure 1, et
- la figure 3 est une vue analogue à la figure 1, alors que le poste de transformation subit une opération de maintenance.

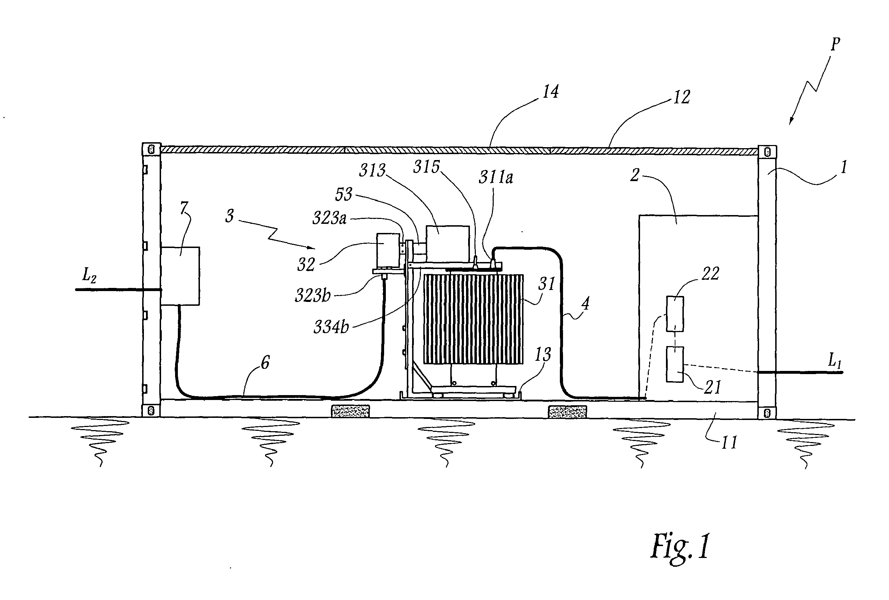

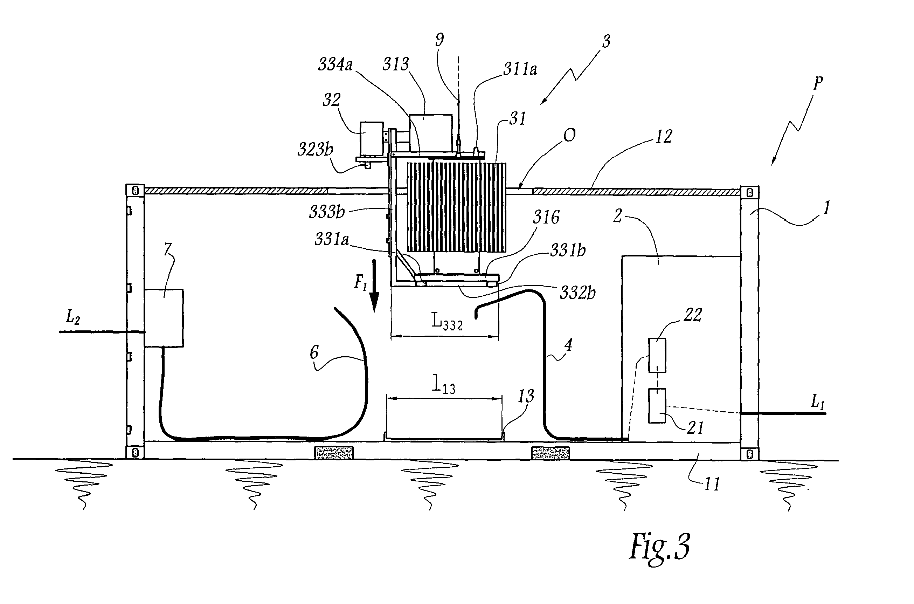

Le poste de transformation P représenté aux figures 1 et 3 comprend une enveloppe 1 formée d'un « conteneur maritime » apte à être transporté par voie maritime, terrestre ou ferroviaire, jusqu'à son site d'utilisation.

A l'intérieur de l'enveloppe 1 est disposé un socle 2 dans lequel sont montées deux cellules haute tension 21 et 22, la cellule 21 étant alimentée par une ligne haute tension L₁ pénétrant dans le poste P, ceci d'une façon connue qui n'est pas représentée en détail. La cellule 21 forme un interrupteur de séparation des trois phases du circuit par rapport au réseau de distribution auquel appartient la ligne L₁. Elle alimente elle même la cellule 22 qui constitue un interrupteur fusible de protection des éléments raccordés en aval. Ces cellules connues en soi permettent de couper le circuit en entrée dans le poste P.

Le poste P comprend également un module 3 qui comprend un transformateur haute tension/basse tension 31 ainsi qu'un disjoncteur général 32 monté sur un support 33 sur lequel est également monté le transformateur 31. Le module 3 forme donc une unité structurelle qui peut être déplacée de façon unitaire en cas de besoin.

Le transformateur 31 est alimenté en haute tension à partir de la cellule 22 par un toron 4 de câbles haute tension qui attaquent respectivement les trois bornes d'entrée du transformateur 31 dont une seule est visible sur les figures avec la référence 311a.

Les trois bornes de sortie de phase 311b, 312b et 313b du transformateur 31 sont protégées par un capot 313 et respectivement reliées par un jeu de barres semi-rigides 51, 52 et 53 aux bornes d'entrée du disjoncteur 32 dont seules deux sont visibles sur les figures, respectivement avec les références 321a et 323a.

Les bornes de sortie 321b, 322b et 323b du disjoncteur 32 sont raccordées à trois câbles d'un toron 6 qui alimente un ensemble basse tension 7 auquel est raccordée une distribution basse tension avec un régime de neutre adapté à la nature de l'installation raccordée en aval. Ce régime de neutre peut être de type ITSN, ITAN, TT, TNC ou TNS selon la norme NFC 15-100.

Ainsi, en fonction de la manoeuvre d'un levier 324 de commande du disjoncteur 32, il est possible d'alimenter ou non le tableau 7 à partir de la basse tension provenant du transformateur 31.

La borne de sortie de neutre 314b du transformateur 31 est reliée par une barre 54 à un dispositif 8 de raccordement de neutre et/ou de terre qui peut être monté dans différentes configurations, comme indiqué ci-dessus en référence à la norme NFC 15-100. Dans l'exemple représenté, le régime de neutre est du type TNC.

Un circuit électrique d'abaissement de la tension électrique est ainsi créé, entre les lignes L₁ et L₂, par les éléments 21, 22, 4, 31, 51 à 53, 32, 6 et 7.

Le transformateur 31 est pourvu de deux crochets de levage 315 qui permettent de soulever l'unité 3 par rapport au fond 11 de l'enveloppe 1 lorsque cela est nécessaire.

Une ouverture O est ménagée dans le plafond 12 de l'enveloppe 1, au-dessus d'un bac 13 posé sur le fond 11 et destiné à recevoir la partie inférieure de l'unité 3, ce bac permettant de collecter des écoulements en provenance du transformateur 31, notamment le liquide de refroidissement en cas de fuite. Le bac 13 est ainsi un bac de rétention qui définit l'emplacement de l'unité 3 dans l'enveloppe 1.

Un panneau de fermeture 14 obture l'ouverture O lorsque le poste P est en configuration de fonctionnement.

Comme il ressort plus particulièrement de la figure 3, après que l'unité 3 a été constituée en assemblant le transformateur 31 et le disjoncteur 32 grâce au support 33 et en raccordant ces matériels grâce aux barres 51 à 53, l'unité 3 peut être mise en place dans le poste P, à travers l'ouverture O et alors que le panneau 14 est retiré, par un mouvement vertical dirigé vers le bas, comme représenté par la flèche F₁. Pour ce faire, l'unité 3 est suspendue par les crochets 315 à un câble de levage 9 appartenant à un pont de levage ou à une grue non représenté.

Il est alors possible de raccorder les torons 4 et 6 respectivement aux bornes d'entrée du transformateur 31 et aux bornes de sortie du disjoncteur 32, le raccordement du neutre et de la terre étant effectué de façon concomitante grâce au dispositif 8 et suivant le régime de neutre adopté.

Ainsi, au cours de la durée de vie du poste P, l'unité 3 peut être échangée en cas de défaut de fonctionnement de celle-ci ou lorsque la puissance de sortie du poste P doit être adaptée à une nouvelle configuration d'utilisation, notamment lorsque l'installation alimentée grâce au poste P voit sa puissance varier. Pour ce faire, il suffit de déconnecter les bornes 311a et équivalentes du toron 4 et les bornes 321b et équivalentes du toron 6 avant de soulever l'unité 3 à travers l'ouverture O dans le sens inverse de celui de la flèche F₁. Il est alors possible d'introduire une nouvelle unité 3, à la façon indiquée ci-dessus.

L'invention tire parti du fait que, en pratique, le couple formé du transformateur et du disjoncteur est dédié à la puissance de sortie du poste de transformation P. Plus précisément, à tension de sortie fixée, l'ampérage nominal du disjoncteur dépend de la puissance nominale du transformateur. Des exemples de valeurs de ces paramètres sont donnés ci-après.

| Puissance nominale du transformateur | Ampérage nominal du disjoncteur | Tension de Sortie |
|---|---|---|
| 160 kVA | 250 A | 400 V |
| 160 kVA | 400 A | 230 V |
| 250 kVA | 400 A | 400 V |
| 250 kVA | 630 A | 230 V |
| 400 kVA | 630 A | 400 V |
| 400 kVA | 1 000 A | 230 V |
| 630 kVA | 1 000 A | 400 V |
| 630 kVA | 1 600 A | 230 V |
| 800 kVA | 1 250 A | 400 V |
| 800 kVA | 2 000 A | 230 V |
| 1 000 kVA | 1 600 A | 400 V |
| 1 250 kVA | 2 000 A | 400 V |

On comprend que lorsque la puissance du transformateur passe de 630 à 1 000 kVA, le disjoncteur associé doit être changé pour avoir un ampérage nominal de 1 600 A 400 V. L'invention permet de procéder à l'échange simultané des éléments 31 et 32, les nouveaux éléments pouvant être directement raccordés sur les torons 4 et 6 qui peuvent rester en place dans le poste P.

Dans le cas d'une augmentation de puissance, un nouveau toron 6 est installé dans le poste en temps masqué, c'est-à-dire avant que l'unité 3 ne soit débranchée. Lorsque la nouvelle unité 3 est en place, elle peut directement raccordée sur le nouveau toron 6 préalablement raccordé au tableau 7.

Le support 33 comprend une partie mécano-soudée comportant deux traverses horizontales 331a et 331b reliées par deux autres traverses 332a et 332b également horizontales et perpendiculaires aux précédentes. Des poteaux 333a et 333b s'étendent verticalement et vers le haut à partir des extrémités des traverses 332a et 332b. Des cornières 334a et 334b sont fixées en partie supérieure du transformateur 31 et solidarisées aux poteaux 333a et 333b grâce à des boulons, dont un seul est visible avec la référence 334c.

Les pièces 331a à 334c forment une partie rigide à laquelle est solidarisé le transformateur 31 et qui repose sur les traverses horizontales par des cornières 316 telles que classiquement prévues sur ce genre de matériel. Les cornières 316 peuvent être assemblées aux traverses horizontales par des boulons 317 ou par tout autre moyen, notamment par soudage.

La longueur des traverses 331a et 331b est légèrement inférieure à la longueur du bac 13 prise perpendiculairement au plan des figures 1 et 3, alors que la longueur L₃₃₂ des traverses 332a et 332b est légèrement inférieure à la largeur l₁₃ du bac 13. Ainsi, lorsque l'unité 31 est en place dans le bac 13, elle est immobilisée selon deux directions horizontales et perpendiculaires entre elles, X-X' et Y-Y', par coopération des extrémités des traverses horizontales 331a, 331b, 332a et 332b avec les bords verticaux du bac 13. Ceci s'avère particulièrement avantageux lorsque le poste P doit être transporté, dans la mesure où l'unité 3 ne risque pas de se déplacer à l'intérieur de l'enveloppe 1.

Deux rails 335a et 335b sont respectivement montés sur les poteaux 333a et 333b, ces rails pouvant recevoir, de façon réglable en hauteur, des rails 336a et 336b de support du dispositif 8 ainsi que deux consoles 337a et 337b sur lesquels sont montés, de façon réglable parallèlement à la direction X-X', deux rails 338a et 338b de support du disjoncteur 32. Ainsi, la position du disjoncteur 32 peut être réglée pour amener ses bornes d'entrée respectives dans une position facilitant leur raccordement aux bornes de sortie du transformateur 31 au moyen des barres 51 à 53. En pratique, les bornes 321a et équivalents sont disposées sensiblement en regard des bornes 311b, 312b et 313b, à la même hauteur par rapport au sol.

On comprend que les parties 335 à 338 du support 33 permettent une adaptation de la position du disjoncteur aux types de transformateur et de disjoncteur effectivement utilisés.

On note que le bac 13 demeure en place lors du changement du module ou unité 3, ce qui est particulièrement avantageux car les éventuels écoulements provenant du transformateur 31 peuvent alors être traités avant mise en place du nouveau module 3, ces écoulement ne risquant pas de déborder vers l'extérieur sous l'effet d'accélérations transversales subies par le module 3 en cours de déplacement.

Selon une variante non représentée de l'invention, l'ouverture à travers laquelle l'unité 3 est introduite dans le poste P peut être prévue non pas au niveau du plafond 12, mais dans l'une des cloisons latérales.

L'invention a été représentée avec un poste de transformation installé à l'intérieur d'une enveloppe formée par un conteneur maritime. Elle s'applique cependant aux postes de transformation installés de façon permanente et dont l'enveloppe est réalisée en maçonnerie traditionnelle ou préfabriquée ou dont l'enveloppe est réalisée en métal ou dans un matériau composite, une ouverture étant alors prévue pour le passage d'un module, comme expliqué précédemment.

Compte tenu de l'invention, en fonction de l'évolution des conditions d'utilisation d'un poste de transformation, les couples formés du transformateur et du disjoncteur peuvent être modifiés de façon particulièrement rapide et simple. L'invention permet en outre de simplifier et de rendre plus rapide la première fabrication d'un poste de transformation dans la mesure où, comme en ce qui concerne une opération de maintenance, les opérations de raccordement électrique entre le transformateur et le disjoncteur général peuvent être effectuées dans un site dédié où l'opérateur travaille dans de bonnes conditions et a un accès facilité aux différentes bornes. Une fois ces opérations effectuées en temps masqué, la mise en place de l'unité ou module transformateur-disjoncteur est rapide et relativement aisée, avec une puissance définie et adaptée à l'utilisation prévue.

L'invention a été représentée pour un poste de transformation alimenté par un réseau en antenne et donc raccordé à la seule ligne L₁. En variante, le poste P peut être alimenté par un réseau en boucle ou en point triple, le nombre des cellules haute tension du type de la cellule 21 étant alors adapté.

L'invention a été représentée pour un poste de transformation qui comprend un tableau basse tension. Elle s'applique cependant indépendamment de la présence d'un tel tableau, le disjoncteur 32 pouvant être raccordé directement à la charge à alimenter.

## Revendications

1. Ensemble comprenant un transformateur (31) haute tension/basse tension et un disjoncteur général (32) appartenant à une même unité structurelle (3) apte à être insérée en une opération (F₁) dans un circuit électrique formé dans un poste de transformation (P), entre une partie haute tension (21, 22, 23, 4) et une partie basse tension (6, 7) dudit circuit, alors que ledit transformateur et ledit disjoncteur sont électriquement raccordés (51-53) l'un à l'autre, ladite unité (3) comprenant un support (33) fixé audit transformateur (31) et sur lequel est monté ledit disjoncteur (32), **caractérisé en ce que** ledit support (33) est réglable, au moins pour ce qui concerne la position dudit disjoncteur (32) par rapport aux bornes de sortie (311b, 312b, 313b) dudit transformateur (31).

2. Ensemble selon la revendication 1, **caractérisé en ce que** ledit support (33) comprend une partie mécano-soudée comportant des traverses horizontales (331a, 331b, 332a, 332b) à partir desquelles s'étendent verticalement des poteaux (334a, 334b), **en ce que** ledit transformateur (31) est solidarisé à ladite partie et **en ce que** des consoles (337a, 337b) de support dudit disjoncteur (32) sont montées de façon réglable en hauteur par rapport auxdits poteaux.

3. Ensemble selon la revendication 2, **caractérisé en ce que** des rails (338a, 338b) de support dudit disjoncteur (32) sont montés sur lesdites consoles (337a, 337b), la position desdits rails par rapport auxdites consoles étant réglable parallèlement à une direction horizontale (X-X').

4. Ensemble selon l'une des revendications précédentes, **caractérisé en ce que** ledit support (33) comprend une partie (331a, 331b, 332a, 332b) formant pied pour ladite unité structurelle (3), ledit transformateur (31) étant monté sur ladite partie.

5. Ensemble selon l'une des revendications précédentes, **caractérisé en ce que** la liaison électrique entre ledit transformateur (31) et ledit disjoncteur (32) est effectuée au moyen de barres électriquement conductrices (51, 52, 53), rigides ou semi-rigides.

6. Poste de transformation d'un courant électrique haute tension en un courant électrique basse tension **caractérisé en ce qu'**il comprend un ensemble (3) selon l'une des revendications précédentes.

7. Poste selon la revendication 6, **caractérisé en ce que** l'enveloppe extérieure (1) dudit poste est pourvue d'une ouverture (O) de dimensions adaptées à la mise en place (F₁) et/ou au retrait de ladite unité structurelle à travers ladite ouverture.

8. Poste selon la revendication 7, **caractérisé en ce que** ladite ouverture (O) est ménagée dans le plafond (12) de ladite enveloppe (1), sensiblement au dessus de l'emplacement (13) de ladite unité structurelle (3).

9. Poste selon l'une des revendications 6 à 8,
**caractérisé en ce que** ledit ensemble (3) est selon la revendication 4, **en ce que** ledit poste (P) est pourvu d'un bac (13) de rétention de liquide s'écoulant éventuellement dudit transformateur (31) et **en ce que** les dimensions (L₃₃₂) de ladite partie formant pied (331a, 331b, 332a, 332b) dudit support sont telles que ladite partie est immobilisée dans ledit bac selon deux directions (X-X', Y-Y') horizontales globalement perpendiculaires.

10. Méthode de fabrication, de réparation ou de modification de puissance d'un poste de transformation d'un courant électrique haute tension en courant électrique basse tension, **caractérisée en ce qu'**elle comprend des étapes consistant à :
- assembler une unité structurelle (3) comprenant un transformateur haute tension/basse tension (31) et un disjoncteur général (32) en réglant la position dudit disjoncteur pour amener ses bornes d'entrées respectives (321a, 323a) dans une position facilitant leur raccordement aux bornes de sortie (311b, 312b, 313b) dudit transformateur et en reliant électriquement ledit transformateur et ledit disjoncteur ;
- installer (F₁), en une opération, ladite unité dans ledit poste (P) et
- raccorder ledit transformateur à la partie haute tension (2) dudit poste et ledit disjoncteur à la partie basse tension (7) dudit poste.
